# EUROPÄISCHE PATENTANMELDUNG

(11) **EP 1 964 460 A1**
(43) Veröffentlichungstag der Anmeldung: **03.09.2008**
(21) Anmeldenummer: 08033512.8
(22) Anmeldetag: 25.02.2008
(51) Int. Cl.: A01C 23/00, A01M 7/00

(54) **Vorrichtung zur Ausbringung flüssiger Düngemittel**

(30) Priorität: 27.02.2007 DE 202007002834 U
(71) Anmelder: Schuster, Gabriele, 59590 Geseke (DE)
(72) Erfinder: Schuster, Gabriele, 59590 Geseke (DE)

(57) **Zusammenfassung**

Die Erfindung betrifft eine Vorrichtung zur Ausbringung flüssiger Düngemittel zur landwirtschaftlichen Boden- und/oder Pflanzenbearbeitung mit einem von einem Zugfahrzeug ziehbaren Anhängefahrzeug (10), welches eine mit dem Zugfahrzeug verbindbare Zugdeichsel (12), zumindest einen mit dem Düngemittel befüllbaren Tank (14), zumindest zwei das Anhängefahrzeug (10) tragende Räder (16) und eine Verteilvorrichtung (18) für das Düngemittel aufweist, wobei die Verteilvorrichtung (18) aus auf dem Anhängefahrzeug (10) gehalterten ausschwenk- und/oder ausfahrbaren Armen (22) besteht, an denen Ausbringdüsen und/oder Ausbringschläuche (24) und/oder Ausbringrohre für das Düngemittel angeordnet sind. Der vorliegenden Erfindung liegt die Aufgabe zugrunde, die Gewichtsverteilung und insbesondere die auf das Zugfahrzeug übertragenen Stützlasten zu verbessern. Diese Aufgabe wird erfindungsgemäß dadurch gelöst, dass die Halterungen für die Arme (22) im Wesentlichen vor dem Tank (14) im Bereich der Zugdeichsel (12) angeordnet sind,

## Beschreibung

Die Erfindung betrifft eine Vorrichtung zur Ausbringung flüssiger Düngemittel zur landwirtschaftlichen Boden- und/oder Pflanzenbearbeitung mit einem von einem Zugfahrzeug ziehbaren Anhängefahrzeug, welches eine mit dem Zugfahrzeug verbindbare Zugdeichsel, zumindest einen mit dem Düngemittel befüllbaren Tank, zumindest zwei das Anhängefahrzeug tragende Räder und eine Verteilvorrichtung für das Düngemittel aufweist, wobei die Verteilvorrichtung aus auf dem Anhängefahrzeug gehalterten ausschwenk- und/oder ausfahrbaren Armen besteht, an denen Ausbringdüsen und/oder Ausbringschläuche und/oder Ausbringrohre für das Düngemittel angeordnet sind.

Derartige Vorrichtungen zur Ausbringung flüssiger Düngemittel wie beispielsweise Gülle, Jauche oder künstlich hergestellter Flüssigdünger sind aus der Praxis hinlänglich bekannt und werden als Güllewagen oder Anhängefeldspritzen bezeichnet. Beispielhaft sei hier auf die DE 200 14 438 U1 oder die DE 601 07 339 T2 verwiesen. Derartige landwirtschaftliche Arbeitsgeräte weisen die Gemeinsamkeit auf, dass die Verteilvorrichtung für das Düngemittel in Fahrtrichtung gesehen hinter dem Tank angeordnet ist. Die Anhängefahrzeuge sind in der Regel als so genannte Starrdeichselanhänger ausgebildet, die sowohl Zugkräfte als auch eine Stützlast auf das Zugfahrzeug übertragen. Die übertragenen Stützlasten auf das Zugfahrzeug dürfen beim Betrieb auf öffentlichen Straße gemäß deutscher Straßenverkehrs-Zulassungs-Ordnung bzw. EU-Bauartgenehmigung eine Masse von 3 Tonnen, in Ausnahmefällen eine Masse von 4 Tonnen nicht überschreiten, da sonst aufgrund der Vorderachsentlastung ein sicheres Lenkverhalten des Zugfahrzeugs nicht mehr gegeben ist. Somit sind die Anhängefahrzeuge derart ausgebildet, das ihre wesentliche Masse durch die Räder getragen wird. Wenn nun die Arme der bis zu 2 Tonnen schweren Verteilvorrichtung auf dem Feld ausgebreitet werden, kommt es aufgrund der Schwerpunktverlagerung des Gesamtsystems zu einer weiteren Entlastung der auf das Zugfahrzeug übertragenen Stützlasten, was unerwünscht ist, weil dadurch die Traktion des Zugfahrzeugs negativ beeinflusst wird. Zusätzlich ergibt sich der Nachteil, dass eine noch größere Masse über die Räder auf den Feldboden übertragen wird, was zu einer erhöhten Bodenverdichtung im Bereich der Fahrspur des Anhängefahrzeugs führt. Ein weiterer Nachteil bei aus der Praxis bekannten Vorrichtungen zur Ausbringung flüssiger Düngemittel ist in der aufgrund des großen Abstandes zwischen Zugfahrzeugs und Verteilvorrichtung schlechten Übersicht für den Fahrer zu sehen.

Der vorliegenden Erfindung liegt die Aufgabe zugrunde, eine Vorrichtung zur Ausbringung flüssiger Düngemittel gemäß dem Oberbegriff des Anspruchs 1 dahingehend zu verbessern, dass sie die Nachteile des Standes der Technik vermeidet.

Diese Aufgabe wird erfindungsgemäß durch die kennzeichnenden Merkmale des Anspruchs 1 gelöst.
Dadurch, dass die Halterungen für die Arme im Wesentlichen vor dem Tank im Bereich der Zugdeichsel angeordnet sind, wird auch bei auf dem Feld ausgeschwenkten oder ausgefahrenen Armen der Verteilvorrichtung eine permanent hohe Stützlast auf das Zugfahrzeug übertragen, so dass dauerhaft eine Gute Traktion der Antriebsräder des Zugfahrzeugs gewährleistet ist. Durch das Ausschwenken oder Ausfahren der Arme kommt es aufgrund der Schwerpunktverlagerung sogar dazu, dass die übertragene Stützlast gegenüber der Straßenfahrt erhöht wird, was zum Einen den Vorteil der besseren Traktion zum Anderen aber auch den Vorteil der gleichmäßigeren Gewichtsverteilung auf alle Räder des Fahrzeugverbundes bewirkt, was zu einer geringeren Bodenverdichtung im Bereich der Fahrspur führt. Ein weiterer Vorteil einer derartigen Anordnung der Verteilvorrichtung ist in dem aufgrund der Schwerpunktverlagerung verbesserten dynamischen Fahrverhalten zu sehen. Da der Fahrer des Zugfahrzeugs die Arme der Verteilvorrichtung sowohl beim Ausfahren oder Ausschwenken aber auch während der Funktion auf dem Feld aufgrund der näheren Anordnung zum Zugfahrzeug insbesondere bei Kurvenfahrt besser einsehen kann, ist eine dauerhaft sichere und ermüdungsfreie Arbeit des Fahrers gegeben. Ein weiterer Vorteil ist darin zu sehen, dass bei Kollision oder drohender Kollision mit Hindernissen wie beispielsweise Bäumen die Arme entgegengesetzt der Fahrtrichtung verschwenkt werden können, so dass es zu keinerlei Zerstörung an der Verteilvorrichtung kommt.

Ein konstruktiv einfacher Aufbau ist bei einer vorteilhaften Ausführungsform der Erfindung dadurch gegeben, dass die Arme an einem auf dem Anhängefahrzeug angeordneten Gestell gehaltert sind.

Bei einer vorteilhaften Ausbildung der Erfindung sind die Halterungen für die Arme und/oder das Gestell zumindest bereichsweise oberhalb der Zugdeichsel angeordnet, so dass sowohl eine optimale Gewichtsverteilung, aber auch die notwendige Bodenfreiheit gegeben ist.

Um einen dauerhaft stabilen und montagefreundlichen Aufbau des Anhängefahrzeugs zu gewährleisten, ist bei einer vorteilhaften Weiterbildung der Erfindung die Zugdeichsel mit einem mit dem Tank und den Rädern verbindbaren Fahrgestell verbunden.

Ein einfacher, sicherer und montagefreundlicher Aufbau ergibt sich dadurch, dass die Arme und/oder das Gestell lösbar oder unlösbar mit der Zugdeichsel und/oder dem Fahrgestell und/oder dem Tank verbunden sind.

Um die maximal zulässigen Breiten und Längen für die Straßenfahrt einhalten zu können, sind die Arme von einer im Wesentlichen parallel zur Längsachse des Anhängefahrzeugs verlaufenden Transportstellung in eine im Wesentlichen quer zur Längsachse des Anhängefahrzeugs verlaufenden Funktionsstellung verschwenkbar. Die Anordnung des die Arme tragenden Gestells vor dem Tank bietet den weiteren Vorteil, dass die Arme, aufgrund des während der Straßenfahrt nach Hinten erlaubten Überstandes der Arme, länger einstückig ausgebildet werden können, was den Vorteil bietet, dass sie kostengünstiger herstellbar sind und die mechanische Belastung durch Knickstellen insbesondere bei den Verteilschläuchen verringert wird.

Um während der Straßenfahrt eine große Bodenfreiheit, gleichzeitig aber auch während der Feldfahrt eine bodennahe und somit effektivere und geruchsneutrale Ausbringung des Düngemittels zu gewährleisten, ist das Gestell und/oder zumindest ein Arm bei einer vorteilhaften Weiterbildung vertikal im Bezug auf die Querachse des Anhängefahrzeugs verstellbar.

Bei einseitiger Fahrt am Hang ist die Hangneigung bei einer vorteilhaften Weiterbildung dadurch zumindest bereichsweise ausgleichbar, dass zumindest ein Arm in der Neigung verschwenkbar an dem Anhängefahrzeug angeordnet ist.

Damit die Räder des Anhängefahrzeugs nicht dauerhaft durch bereits ausgebrachtes Düngemittel fahren, ist die vor dem Tank angeordnete Verteilvorrichtung in der Breite der Fahrspur ohne Ausbringdüsen und/oder Ausbringschläuche und/oder Ausbringrohre ausgebildet. Damit es dadurch aber nicht zu ungedüngten Fahrspurbereichen auf dem Feld kommt, ist bei einer vorteilhaften Weiterbildung in Fahrtrichtung gesehen hinter den Rädern ein zusätzliches Gestell angeordnet, welches Ausbringdüsen und/oder Ausbringschläuche und/oder Ausbringrohre aufweist.

Das zusätzliche Gestell weist vorteilhaft ausschwenk- und/oder ausfahrbare Arme auf, um sowohl eine schmale Transportstellung für die Straßenfahrt, aber auch eine breite Funktionsstellung während der Feldfahrt zu gewährleisten.

Um auch hier eine große Bodenfreiheit während der Straßenfahrt und eine bodennahe Ausbringung des Düngemittels während der Feldfahrt zu gewährleisten, sind das zusätzliche Gestell und/oder die Arme vertikal im Bezug auf die Querachse des Anhängefahrzeugs verstellbar.

Da es Aufgrund der unterschiedlich platzierten Anordnung der Verteilvorrichtungen vor bzw. hinter dem Tank bei der Kurvenfahrt zu unterschiedlichen Radienverläufen der einzelnen Verteilvorrichtungen kommt, sind bei einer vorteilhaften Weiterbildung das zusätzliche Gestell und/oder dessen Arme horizontal im Bezug auf die Querachse des Anhängefahrzeugs verstellbar, um so den Radienunterschied auszugleichen und eine flächendeckende und gleichmäßige Ausbringung des Düngemittels zu gewährleisten.

Um die Ausbringung des flüssigen Düngemittels flexibel zu gestalten und auch eine Aufbringung auf beispielsweise schmalen Teilbereichen des Feldes zu ermöglichen, sind bei einer vorteilhaften Weiterbildung die Ausbringdüsen und/oder Ausbringschläuche und/oder Ausbringrohre einzeln und/oder bereichsweise ansteuerbar.

Bei einer vorteilhaften Weiterbildung der Erfindung erfolgt die erwähnte Verstellung und/oder Verschwenkung und/oder Verschiebung und/oder Ansteuerung manuell, pneumatisch, hydraulisch und/oder elektromotorisch.

Vorteilhaft erfolgt die erwähnte Verstellung und/oder Verschwenkung und/oder Verschiebung und/oder Ansteuerung automatisch in Abhängigkeit zumindest eines Funktionsparameters, wobei der Funktionsparameter eine Bedienvorgabe des Bedieners (bzw. Fahrers) und/oder ein Sensorsignal ist, was zu einer weiteren Entlastung des Fahrers führt.

Das Sensorsignal wird vorteilhaft durch Abstandssensoren wie beispielsweise Radar- oder Ultraschallsensoren, und/oder Kraftsensoren wie beispielsweise Druck- oder Zugsensoren, und/oder optische Sensoren wie beispielsweise Laserscanner oder Bilderfassungsensoren, und/oder Positionserfassungssensoren wie beispielsweise Drehpotentiometer oder mit einer Feldkartierung kombinierte GPS- oder DGPS-Sensoren erzeugt. Durch die Sensoren können beispielsweise Bearbeitungskanten, Fahrspuren, Hindernisse oder Bearbeitungsbereiche auf dem Feld erfasst werden, die einen entsprechenden Funktionsparameter an die Steuerung des Anhängefahrzeuges und/oder des Zugfahrzeuges weitergeben. So kann beispielsweise eine automatische Spurführung auf dem Feld realisiert werden, die eine flächendeckende, gleichmäßige und für den Fahrer ermüdungsfreie Ausbringung des Düngemittels gewährleistet. Ein weiteres Beispiel besteht in dem automatischen Einschwenken zumindest eines Arms bei Hinderniserkennung um eine Zerstörung der Funktionselemente zu verhindern.

Um das Fahrverhalten des Anhängefahrzeugs noch weiter zu verbessern und auch enge Kurvenfahrten in Eckbereichen des Feldes zu ermöglichen sind bei einer vorteilhaften Weiterbildung die zumindest zwei Räder des Anhängefahrzeugs als lenkbare Räder ausgebildet.

Eine extrem große Arbeitsbreite für die Vorrichtung zur Ausbringung flüssiger Düngemittel ist bei einer vorteilhaften Weiterbildung dadurch gegeben, dass die Arme zumindest bereichsweise mehrteilig und klappbar ausgebildet sind. Hierdurch ist für die Funktionsstellung beispielsweise eine Arbeitsbreite von bis zu 32 Meter möglich, was die benötigten Überfahrten über das Feld, und somit sowohl die Arbeitszeit als auch die Fläche der Bodenverdichtung verringert.

Anhand der beigefügten Zeichnungen wird ein Ausführungsbeispiel der Erfindung nachfolgend näher erläutert. Dabei zeigt:
- Fig. 1: eine Draufsicht eines schematisch dargestellten Anhängefahrzeugs in Funktionsstellung,
- Fig. 2: eine perspektivische Ansicht des in Fig. 1 dargestellten Anhängefahrzeugs,
- Fig. 3: eine Seitenansicht des in Fig. 1 dargestellten Anhängefahrzeugs,
- Fig. 4: die Vorderansicht des in Fig. 1 dargestellten Anhängefahrzeugs,
- Fig. 5: eine alternative Vorderansicht des in Fig. 1 dargestellten Anhängefahrzeugs,
- Fig. 6: eine perspektivische Ansicht eine schematisch dargestellten Anhängefahrzeugs in Transportstellung,
- Fig. 7: eine Seitenansicht des in Figur 6 dargestellten Anhängefahrzeugs,
- Fig. 8: die Vorderansicht des in Figur 6 dargestellten Anhängefahrzeugs und
- Fig. 9: die Heckansicht des in Figur 6 dargestellten Anhängefahrzeugs.

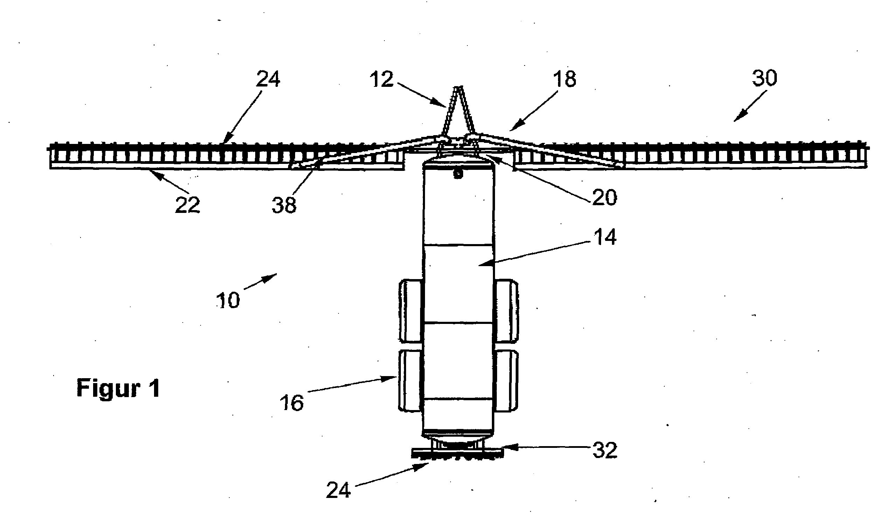

In Figur 1 ist ein schematisch dargestelltes Anhängefahrzeug (10) in Funktionsstellung (30) in einer Draufsicht dargestellt. Das Anhängefahrzeug (10) besteht aus einer mit einem nicht dargestellten Zugfahrzeug verbindbaren Zugdeichsel (12), einer noch näher zu beschreibenden Verteilvorrichtung (18) für das Düngemittel, einem Tank (14) und in diesem Fall vier das Anhängefahrzeug (10) tragenden Rädern (16). In Fahrtrichtung gesehen vor dem Tank (14) ist die Verteilvorrichtung (18) auf der Zugdeichsel (12) angeordnet. Die Verteilvorrichtung (18) besteht aus einem mit der Zugdeichsel (12) und dem Tank (14) verbundenen Gestell (20), an welches sich nach rechts und links ausgeschwenkte Arme (22) anschließen, die Ausbringschläuche (24) zur bodennahen Ausbringung von beispielsweise Gülle aufweisen. Damit die Räder (16) nicht dauerhaft durch bereits ausgebrachte Gülle fahren müssen, ist der Fahrspurbereich der Verteilvorrichtung (18) nicht mit Ausbringschläuchen (24) ausgebildet. Hierdurch würde es jedoch zu einem nicht gedüngten Streifen auf dem Feld kommen. Um dies zu verhindern, ist am Heck des Anhängefahrzeugs (10), hinter dem Tank (14) ein zusätzliches Gestell (32) angeordnet, das ebenfalls Ausbringschläuche aufweist. Das Düngemittel, in diesem Fall Gülle, wird mittels einer Pumpe aus dem Tank (14) heraus über Verteilrohre (38) zu den Ausbringschläuchen (24), sowohl an den Armen (22) als auch an dem zusätzlichen Gestell (32) am Heck transportiert.

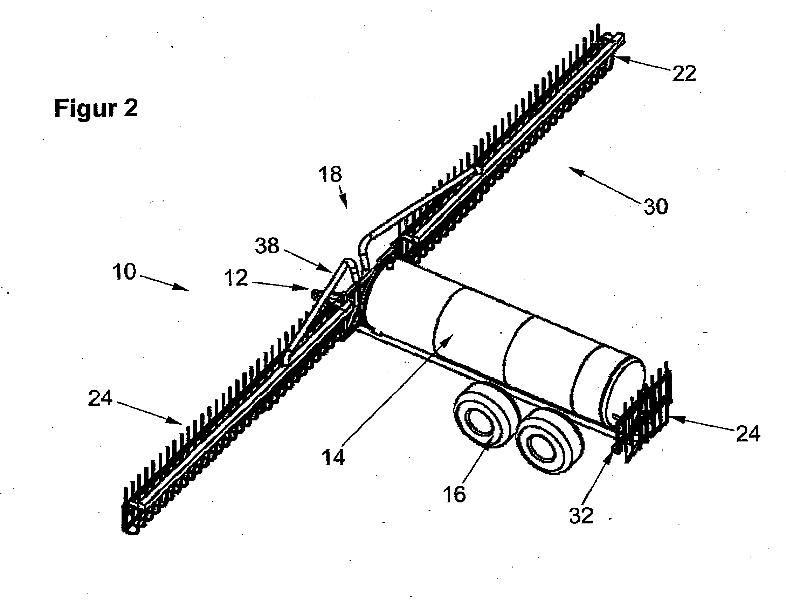

In Figur 2 wird eine perspektivische Ansicht des in Figur 1 dargestellten Anhängefahrzeugs (10) gezeigt. Zur Anordnung und Funktionsweise der einzelnen Elemente wird auf die Beschreibung und die zu Figur 1 gemachte Figurenbeschreibung verwiesen.

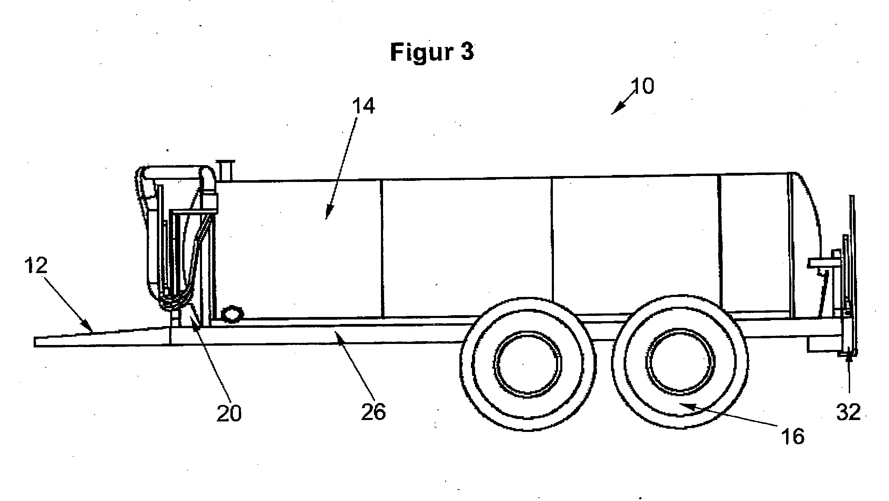

Figur 3 zeigt eine Seitenansicht des in Figur 1 dargestellten Anhängefahrzeugs (10). Auf der Zugdeichsel (12) ist vor dem Tank (14) das die Arme tragende Gestell (20) angeordnet. Zur besseren Stabilität des Anhängefahrzeugs (10) ist die Zugdeichsel (12) einstückig mit einem Fahrgestell (26) ausgebildet, welches sowohl den Tank (14) trägt, als auch mit den Rädern (16) in Wirkverbindung steht. Am Heck des Anhängefahrzeugs (10) ist hinter dem Tank (14) das bereits zu Figur 1 beschriebene zusätzliche Gestell (32) angeordnet.

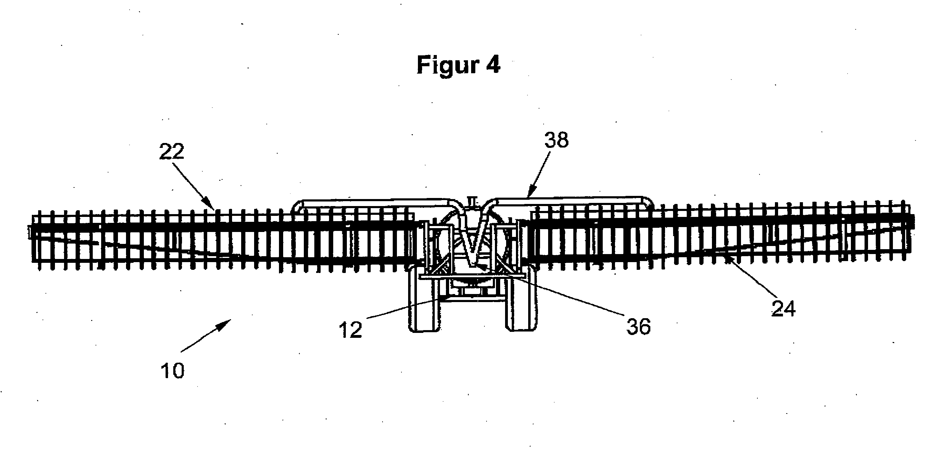

In Figur 4 ist das Anhängefahrzeug (10) in der Vorderansicht dargestellt. Oberhalb der Zugdeichsel (12) ist eine Pumpe (36) angeordnet, die das Düngemittel aus dem Tank über Verteilrohre (38) in die Ausbringschläuche (24) der Arme (22) pumpt.

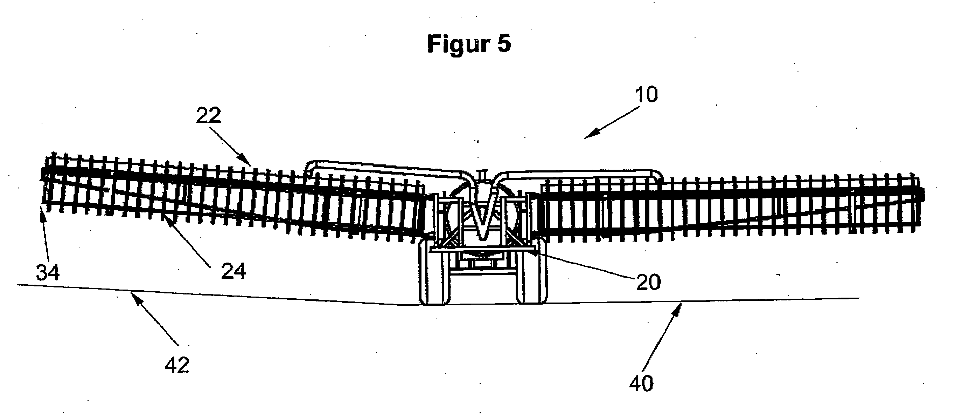

In Figur 5 ist das Anhängefahrzeug (10) wiederum in der Vorderansicht dargestellt, wobei diesmal der zu düngende Feldboden (40) mit gezeigt ist. Felder und somit die Feldböden (40) sind in der Regel nicht eben, so dass es während der Düngung dazu kommen kann, dass eine einseitige Fahrt am Hang (42) erfolgt, Hierbei besteht das Problem, dass der Abstand zwischen dem Armen (22) und dem Feldboden (40) verringert wird und die Ausbringschläuche (24) gegebenenfalls sehr stark über den Feldboden (40) schleifen, was zu einer ungleichmäßigen Düngung und sehr starken Abnutzung der Ausbringschläuche führt. Um dies zu verhindern, ist am Ende der Arme (22) jeweils ein Sensor (34) angeordnet, der permanent den Abstand zwischen den Armen (22) und dem Feldboden (40) überwacht und ein Sensorsignal erzeugt, in dessen Abhängigkeit der jeweilige Arme (22) um einen Drehpunkt am Gestell (20) herum verschwenkt werden kann. Das Verschwenken ist Selbstverständlicherweise nicht nur wie dargestellt nach Oben möglich, sondern auch ein Verschwenken nach Unten liegt im Bereich des Erfindungsgedankens.

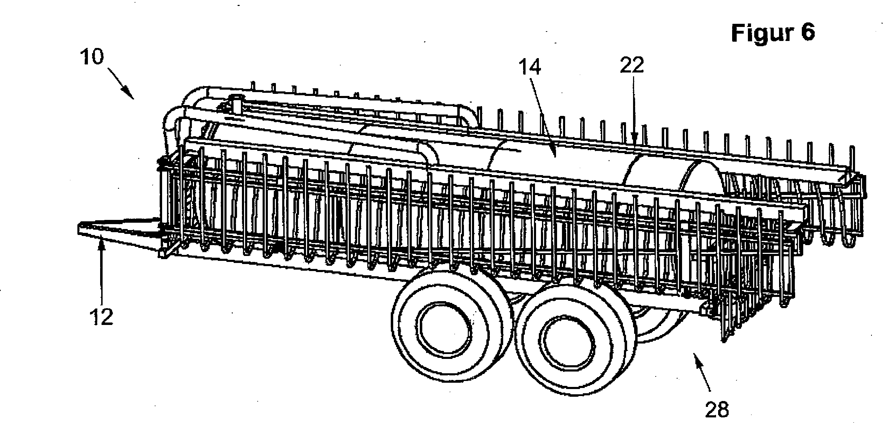

In Figur 6 wird ein schematisch dargestelltes Anhängefahrzeug (10) in Transportstellung (28) gezeigt. Um die für eine Straßenfahrt zulässigen Abmessungen sowohl in der Länge als auch in der Breite einhalten zu können, sind die im Bereich der Zugdeichsel (12) verschwenkbar befestigten Arme (22) in eine Stellung längs des Tanks (14) verschwenkt. Am Heck des Anhängefahrzeugs (10) stehen die Arme (22) in erlaubter Länge über das Fahrzeug hinaus. Wenn es jetzt erwünscht wird, dass noch längere Arme (22) eingesetzt werden sollen, so kann der jeweilige Arm (22) mehrteilig ausgebildet sein und beispielsweise das äußere Ende des Arms (22) in der TransportStellung hinter das Heck des Anhängefahrzeugs (10) schwenken.

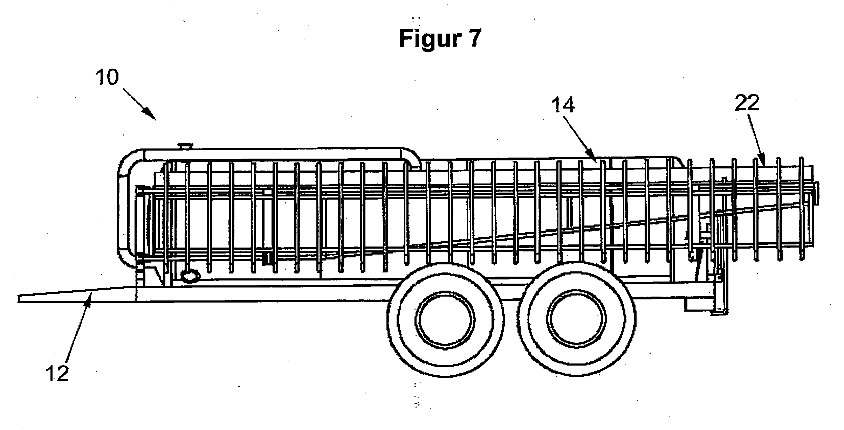

In Figur 7 ist das in Figur 6 gezeigte Anhängefahrzeug in einer Seitenansicht dargestellt. Zur Anordnung und Funktionsweise der einzelnen Elemente wird auf die Beschreibung und auf die zu den Figuren 1 bis 6 gemachte Figurenbeschreibung verwiesen.

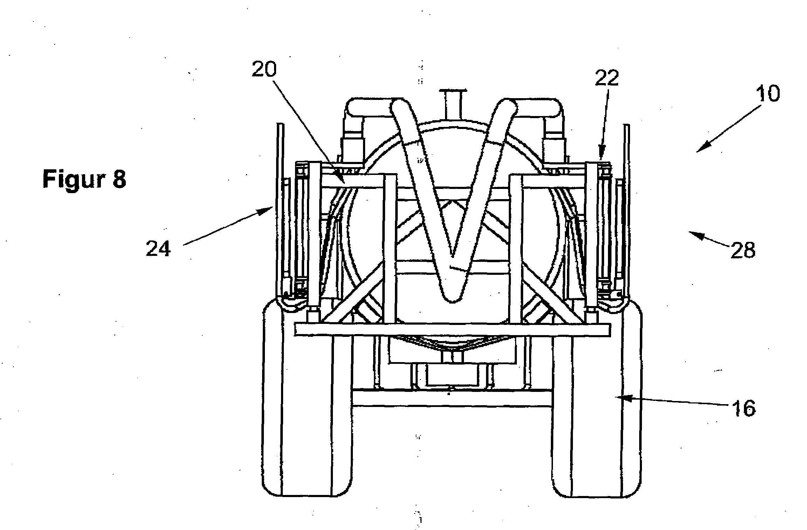

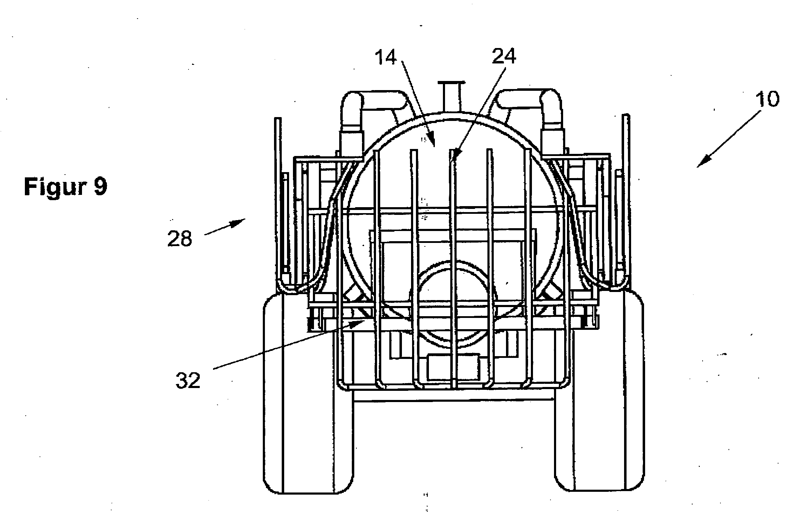

In Figur 8 ist eine Vorderansicht und in Figur 9 eine Heckansicht des Anhängefahrzeugs (10) in Transportstellung (28) dargestellt. Weder der Tank (14), noch das Gestell (20), die Arme (22), die Ausbringschläuche (24) oder das zusätzliche Gestell (32) ragen über die zugelassene Breite des Anhängefahrzeugs (10) hinaus, so dass bei der Transportfahrt die Räder (16) die maximale Breite des Anhängefahrzeugs (10) bestimmen.

### Bezugszeichenliste

- 10: Anhängefahrzeug
- 12: Zugdeichsel
- 14: Tank
- 16: Rad.
- 18: Verteilvorrichtung
- 20: Gestell
- 22: Arm
- 24: Ausbringschlauch
- 26: Fahrgestell
- 28: Transportstellung
- 30: Funktionsstellung
- 32: Gestell
- 34: Sensor
- 36 .: Pumpe
- 38: Verteilrohr
- 40: Feldboden
- 42: Hang

## Patentansprüche

1. Vorrichtung zur Ausbringung flüssiger,Düngemittel zur landwirtschaftlichen Boden- und/oder Pflanzenbearbeitung mit einem von einem Zugfahrzeug ziehbaren Anhängefahrzeug (10), welches eine mit dem Zugfahrzeug verbindbare Zugdeichsel (12), zumindest einen mit dem Düngemittel befüllbaren Tank (14), zumindest zwei das Anhängefahrzeug (10) tragende Räder (16) und eine Verteilvorrichtung (18) für das Düngemittel aufweist, wobei die Verteilvorrichtung (18) aus auf dem Anhängefahrzeug (10) gehalterten ausschwenk- und/oder ausfahrbaren Armen (22) besteht, an denen Ausbringdüsen und/oder Ausbringschläuche (24) und/oder Ausbringrohre für das Düngemittel angeordnet sind, **dadurch gekennzeichnet, dass** die Halterungen für die Arme (22) im Wesentlichen vor dem Tank (14) im Bereich der . Zugdeichsel (12) angeordnet sind.

2. Vorrichtung zur Ausbringung flüssiger Düngemittel nach Anspruch 1, **dadurch gekennzeichnet, dass** die Arme (22) an einem auf dem Anhängefahrzeug (10) angeordneten Gestell (20) gehaltert sind.

3. Vorrichtung zur Ausbringung flüssiger Düngemittel nach Anspruch 1 oder 2, **dadurch gekennzeichnet, dass** die Halterungen für die Arme (22) und/oder das Gestell (20) zumindest bereichsweise oberhalb der Zugdeichsel (12) angeordnet sind.

4. Vorrichtung zur Ausbringung flüssiger Düngemittel nach einem der vorstehenden Ansprüche, **dadurch gekennzeichnet, dass** die Zugdeichsel (12) mit einem mit dem Tank (14) und den Rädern (16) verbindbaren Fahrgestell (26) verbunden ist.

5. Vorrichtung zur Ausbringung flüssiger Düngemittel nach einem der vorstehenden Ansprüche, **dadurch gekennzeichnet, dass** die Arme (22) und/oder das Gestell (20) lösbar oder unlösbar mit der Zugdeichsel (12) und/oder dem Fahrgestell (26) verbunden sind.

6. Vorrichtung zur Ausbringung flüssiger Düngemittel nach einem der vorstehenden Ansprüche, **dadurch gekennzeichnet, dass** die Arme (22) und/oder das Gestell (20) lösbar oder unlösbar mit dem Tank (14) verbunden sind.

7. Vorrichtung zur Ausbringung flüssiger Düngemittel nach einem der vorstehenden Ansprüche, **dadurch gekennzeichnet, dass** die Arme (22) von einer im wesentlichen parallel zur Längsachse des Anhängefahrzeugs (10) verlaufenden Transportstellung (28) in eine im wesentlichen quer zur Längsachse des Anhängerfahrzeugs (10) verlaufenden Funktionsstellung (30) verschwenkbar sind.

8. Vorrichtung zur Ausbringung flüssiger Düngemittel nach einem der vorstehenden Ansprüche, **dadurch gekennzeichnet, dass** das Gestell (20) und/oder zumindest ein Arm (22) vertikal im Bezug auf die Querachse des Anhängefahrzeugs (10) verstellbar ist.

9. Vorrichtung zur Ausbringung flüssiger Düngemittel nach einem der vorstehenden Ansprüche, **dadurch gekennzeichnet, dass** zumindest ein Arm (22) in der Neigung verschwenkbar an dem Anhängefahrzeug (10) angeordnet ist.

10. Vorrichtung zur Ausbringung flüssiger Düngemittel nach einem der vorstehenden Ansprüche, **dadurch gekennzeichnet, dass** in Fahrtrichtung gesehen hinter den Rädern (16) ein zusätzliches Gestell (32) angeordnet ist, welches Ausbringdüsen und/oder Ausbringschläuche (24) und/oder Ausbringrohre für das Düngemittel aufweist.

11. Vorrichtung zur Ausbringung flüssiger Düngemittel nach Anspruch 10, **dadurch gekennzeichnet, dass** das zusätzliche Gestell (32) ausschwenk- und/oder ausfahrbare Arme aufweist.

12. Vorrichtung zur Ausbringung flüssiger. Düngemittel nach einem der Ansprüche 10 oder 11, **dadurch gekennzeichnet, dass** das zusätzliche Gestell (32) und/oder die Arme vertikal im Bezug auf die Querachse des Anhängefahrzeugs (10) verstellbar sind.

13. Vorrichtung zur Ausbringung flüssiger Düngemittel nach einem der Ansprüche 10 bis 12, **dadurch gekennzeichnet, dass** das zusätzliche Gestell (32) und/oder die Arme horizontal im Bezug auf die Querachse des Anhängefahrzeugs (10) verstellbar sind.

14. Vorrichtung zur Ausbringung flüssiger Düngemittel nach einem,der vorstehenden Ansprüche, **dadurch gekennzeichnet, dass** die Ausbringdüsen und/oder Ausbringschläuche (24) und/oder Ausbringrohre einzeln und/oder bereichsweise ansteuerbar sind.

15. Vorrichtung zur Ausbringung flüssiger Düngemittel nach einem der Ansprüche 7 bis 14, **dadurch gekennzeichnet, dass** die Verstellung und/oder Verschwenkung und/oder Verschiebung und/oder Ansteuerung manuell, pneumatisch, hydraulisch und/oder elektromotorisch erfolgt.

16. Vorrichtung zur Ausbringung flüssiger Düngemittel nach einem der Ansprüche 7 bis 15, **dadurch gekennzeichnet, dass** die Verstellung und/oder Verschwenkung und/oder Verschiebung und/oder Ansteuerung automatisch in Abhängigkeit zumindest eines Funktionsparameters erfolgt.

17. Vorrichtung zur Ausbringung flüssiger Düngemittel nach Anspruch 16, **dadurch gekennzeichnet, dass** der zumindest eine Funktionsparameter eine Bedienvorgabe des Bedieners und/oder ein Sensorsignal ist.

18. Vorrichtung zur Ausbringung flüssiger Düngemittel nach Anspruch 17, **dadurch gekennzeichnet, dass** das Sensorsignal durch Abstandssensoren (34) und/oder Kraftsensoren und/oder optische Sensoren und/oder Positionserfassungssensoren erzeugt wird.

19. Vorrichtung zur Ausbringung flüssiger Düngemittel nach einem der vorstehenden Ansprüche, **dadurch gekennzeichnet, dass** die zumindest zwei Räder (16) des Anhängefahrzeugs (10) als lenkbare Räder ausgebildet sind.

20. Vorrichtung zur Ausbringung flüssiger Düngemittel nach einem der vorstehenden Ansprüche, **dadurch gekennzeichnet, dass** die Arme (22) zumindest bereichsweise mehrteilig und klappbar ausgebildet sind.
